# FASCICULE DE BREVET EUROPEEN

(11) **EP 3 148 719 B1**
(45) Date de publication et mention de la délivrance du brevet: **22.08.2018**
(21) Numéro de dépôt: 15798220.8
(22) Date de dépôt: 02.11.2015
(51) Int. Cl.: C01B 32/05, C02F 103/00, C02F 1/00, C02F 11/10, F23G 5/027

(54) **PROCEDE DE CARBONISATION HYDROTHERMALE D'UNE BIOMASSE, ET DISPOSITIF S'Y RAPPORTANT**
VERFAHREN ZUR HYDROTHERMALEN KARBONISIERUNG VON BIOMASSE UND ZUGEHÖRIGE VORRICHTUNG
METHOD FOR THE HYDROTHERMAL CARBONISATION OF A BIOMASS AND ASSOCIATED DEVICE

(30) Priorité: 04.11.2014 FR 1460616
(43) Date de publication de la demande: 05.04.2017
(73) Titulaire: Suez International, 92040 Paris la Défense Cedex (FR)
(72) Inventeur: PARDO, Pierre Emmanuel, F-91400 Orsay (FR); BOURDAIS, Jean-Louis, F-44110 Chateaubriant (FR)
(74) Mandataire: IPAZ
(86) Numéro de dépôt international: PCT/IB2015/058468
(87) Numéro de publication internationale: WO 2016/071828

(56) Documents cités:
- EP-A1- 2 206 688
- EP-A1- 2 719 748
- EP-A2- 2 388 305
- WO-A2-03/043939
- DE-U1-202011 110 246
- US-A- 3 962 076
- US-A1- 2006 096 163

## Description

### Domaine technique

La présente invention se rapporte au domaine du traitement thermique et chimique d'une biomasse telle que de la boue issue d'une filière de traitement des eaux usées.

La présente invention concerne plus particulièrement un procédé de carbonisation hydrothermale d'une biomasse ainsi qu'un dispositif pour mettre en oeuvre un tel procédé.

### Etat de la technique antérieure

On connaît dans l'art antérieur un procédé de carbonisation hydrothermale consistant typiquement à soumettre une biomasse à une température proche de 200°C (par exemple US2006/096163) et à une pression proche de 20 bars.

Le brevet EP 2 388 305 A2 décrit une installation comprenant un trajet de traitement dans lequel une biomasse est mise en circulation, ce trajet comportant notamment un échangeur de chaleur et un réacteur. L'échangeur de chaleur est agencé de manière à réchauffer la biomasse circulant dans le trajet par l'intermédiaire d'un circuit de transfert au sein duquel circule un fluide de transfert. Après avoir été préchauffé au sein de cet échangeur de chaleur, la biomasse est ensuite carbonisée au sein du réacteur dans lequel elle effectue un temps de séjour moyen d'environ 4 heures.

Le brevet EP 2 388 305 A2 rapporte en outre des résultats d'essais d'après lesquels l'injection d'un additif tel que de la glycérine dans la biomasse permet de diminuer significativement la viscosité de cette biomasse et de favoriser significativement la montée en température du mélange comprenant la biomasse et l'additif au sein du réacteur.

Une telle installation ou un tel procédé de carbonisation hydrothermale présente plusieurs inconvénients :
- le réacteur doit fournir de l'énergie pour augmenter la température de la biomasse,
- le temps de séjour de la biomasse au sein du réacteur implique de brasser la biomasse au sein du réacteur pour assurer l'échange thermique et homogénéiser le chauffage,
- le gradient de température entre la surface chauffante du réacteur et la biomasse favorise la sédimentation de la biomasse, conduisant à mettre en oeuvre un mélangeur-racleur afin d'éliminer le dépôt de la biomasse sur les parois internes du réacteur, le mélangeur-racleur impliquant aussi des coûts de maintenance et constituant en outre une pièce à risque pour le personnel et une pièce diminuant la fiabilité de l'installation,
- le temps de séjour inhérent au chauffage de la biomasse dans le réacteur limite le volume de biomasse que l'installation peut traiter et impose d'augmenter le volume du réacteur pour traiter davantage de biomasse,
- la montée en température de la biomasse au sein de l'échangeur de chaleur est limitée par la viscosité relativement importante de la biomasse entrant dans l'installation ; à titre d'indication, une boue déshydratée est au moins dix fois plus visqueuse que de l'eau,
- les caractéristiques thermiques d'une biomasse de type boue d'épuration impliquent d'importantes puissances de pompe d'injection et donc un important coût en énergie électrique.

La présente invention a notamment pour but de pallier tout ou partie de ces inconvénients en proposant un procédé pour chauffer une biomasse, ainsi qu'un dispositif pour mettre un tel procédé en oeuvre, optimisant les échanges thermiques et exploitant l'énergie thermique produite par la mise en oeuvre d'un tel procédé ou le fonctionnement d'un tel dispositif.

### Exposé de l'invention

A cet effet, la présente invention propose un procédé pour chauffer une biomasse en déplacement dans un trajet de traitement industriel comportant une entrée pour la biomasse entrante, une pompe de mise en pression, un moyen de chauffage et un poste de traitement, caractérisé en ce qu'on injecte de la vapeur dans le trajet entre la pompe de mise en pression et le moyen de chauffage et en ce qu'il comprend une étape d'injection d'un additif dans la biomasse en amont du moyen de chauffage dans laquelle on injecte l'additif dans la biomasse de sorte que l'additif soit soumis à la vapeur injectée. Cette injection permet de préchauffer la biomasse par condensation de la vapeur.

De préférence, la vapeur peut être injectée à une pression supérieure d'au moins 0,2 MPa à la pression de la biomasse (pression de la biomasse au niveau de l'injection de vapeur). De préférence, la vitesse d'injection de la vapeur peut être supérieure à 130 m/s, par exemple comprise entre 200 et 250 m/s. La vitesse d'injection de vapeur est typiquement générée par le différentiel de pression de la biomasse et de pression d'injection de la vapeur. La vitesse de vapeur précédemment mentionnée correspond de préférence à une vitesse de la vapeur juste avant que la vapeur n'entre en contact de la biomasse.

De préférence, le débit d'injection de vapeur peut correspondre jusqu'à 20% du débit de la biomasse en déplacement dans le trajet.

Un tel procédé permet de diminuer la viscosité de la biomasse en amont du moyen de chauffage comparativement à un procédé ne réalisant pas une telle injection de vapeur. Cela se traduit par une diminution de la perte de charge dans le trajet et une amélioration du gain d'échange thermique au niveau du moyen de chauffage. Il en résulte une plus grande augmentation de température de la biomasse.

Avantageusement, la biomasse est une boue d'épuration, de préférence déshydratée, et le traitement est une carbonisation hydrothermale.

En effet, la boue d'épuration, notamment déshydratée, possède des coefficients d'échange thermique relativement mauvais, c'est-à-dire défavorisant sa montée en température et impliquant des tailles d'équipement très importantes. Le procédé selon l'invention permet d'améliorer les coefficients d'échange d'une telle boue. Lesdits tailles d'équipement peuvent en particulier être des tailles d'échangeurs.

Selon une caractéristique particulièrement avantageuse, on pilote l'injection de vapeur, par exemple en contrôlant le débit de vapeur injectée, et le moyen de chauffage pour que la température de la biomasse atteigne une température paramétrée avant son arrivée dans le poste de traitement, la température paramétrée étant comprise entre 165°C et 205°C, de préférence 185°C.

De cette façon, la température de la biomasse à son arrivée dans le poste de traitement est suffisamment élevée, en particulier lorsque le traitement est une carbonisation hydrothermale, pour éviter d'avoir à augmenter encore la température de la biomasse au sein du poste de traitement. Cela permet de s'affranchir de la fonction de chauffage du poste de traitement, et donc d'éliminer le gradient de température dans le poste de traitement résultant d'une telle fonction. Par conséquent, un procédé doté d'une telle caractéristique permet de limiter le collage par cuisson (ou dépôt) de la biomasse sur des parois du poste de traitement, un tel collage ou dépôt pouvant aboutir à une interruption des échanges thermiques dans le poste de traitement. Il permet aussi de s'affranchir de tout moyen ou opération destinée à limiter un tel collage ou dépôt (par exemple, une opération de raclage et/ou de mélange).

Un autre avantage de la suppression de la fonction de chauffage du poste de traitement est que, pour une quantité donnée de biomasse à traiter, le volume du poste de traitement peut être diminué, car le temps de séjour de la biomasse, dans le poste de traitement, associé à la fonction de chauffage n'a plus lieu d'être.

Avantageusement, suivant une première variante de l'invention, on injecte la vapeur obliquement ou de préférence perpendiculairement à la direction de déplacement de la biomasse dans le trajet. Cette direction de déplacement de la biomasse dans le trajet est la direction dans laquelle se déplace la biomasse dans une zone d'injection de la vapeur dans le trajet.

Une injection oblique ou de préférence perpendiculaire crée un cisaillement de la biomasse favorisant la dilution de la vapeur dans la biomasse et favorisant ainsi son augmentation en température par condensation de la vapeur.

Toutefois, on peut aussi injecter la vapeur à contre-courant de la biomasse pour obtenir un tel effet de cisaillement.

On peut aussi injecter la vapeur à co-courant de la biomasse.

Avantageusement, suivant une deuxième variante de l'invention, éventuellement combinable avec la première variante de l'invention, on mélange la vapeur injectée à la biomasse en guidant cette vapeur et cette biomasse au travers d'un mélangeur statique, par exemple prenant la forme de chicanes, d'une vis d'Archimède ou de surfaces de guidage fixes aptes à générer des turbulences de la biomasse et de la vapeur circulant dans un tel mélangeur. Plus spécifiquement, de telles chicanes, ou une telle vis d'Archimède ou de telles surfaces de guidage fixes sont aptes à augmenter les turbulences de la biomasse et de la vapeur circulant dans un tel mélangeur. De préférence, un tel mélange de la vapeur et de la biomasse au travers du mélangeur statique est réalisé après mélange dynamique préalable de la vapeur et de la biomasse, i.e. après la zone d'injection de la vapeur dans le trajet, en l'occurrence dans le mélangeur.

Alternativement, la vapeur peut être injectée dans une configuration de la tuyauterie de type éjecteur permettant, en plus du mélange, une amélioration de la mise en pression de la biomasse.

Selon une caractéristique avantageuse, on pilote l'injection de vapeur pour porter la température de la biomasse à une valeur de supérieure à 70°C à l'entrée du moyen de chauffage. En l'occurrence, on pilote pour ce faire le débit de vapeur.

Selon une autre caractéristique avantageuse, la pompe de mise en pression élève la pression de la biomasse jusqu'à une valeur permettant de chauffer la biomasse à une température supérieure à 100°C sans ébullition. Autrement dit, la pompe de mise en pression peut élever la pression de la biomasse au-dessus de la pression de saturation, typiquement supérieure à 1,2 MPa.

Selon encore une autre caractéristique avantageuse, la pression en sortie de pompe de mise en pression est supérieure à 3 MPa.

Ces caractéristiques rendent possible une élévation contrôlée de la température de la biomasse.

Avantageusement, suivant une variante d'un premier type, le trajet comporte en outre un poste de refroidissement en aval du poste de traitement, et on réchauffe un fluide de transfert dans son parcours entre le poste de refroidissement et le moyen de chauffage.

Très avantageusement, on chauffe le fluide de transfert jusqu'à une température supérieure à celle de la biomasse au poste de traitement. La chaleur transférée au moyen de chauffage peut ainsi réchauffer la biomasse jusqu'à ladite température paramétrée avant son arrivée dans le poste de traitement. De préférence, on peut ainsi chauffer le fluide de transfert jusqu'à une température supérieure à 220°C.

Selon une caractéristique très avantageuse, on utilise une même source de chaleur externe pour chauffer le fluide de transfert et un fluide caloporteur assurant une montée et/ou un maintien de température de la biomasse au poste de traitement. Autrement dit, on utilise la même source de chaleur externe pour chauffer :
- d'une part, le fluide de transfert, permettant de chauffer la biomasse avant son arrivée au poste de traitement et,
- d'autre part, le fluide caloporteur, permettant de maintenir la température de la biomasse au poste de traitement, de préférence au moins égale à 180°C.

Une telle utilisation de la source de chaleur externe pour chauffer le fluide de transfert permet de limiter la dimension du moyen de chauffage.

Avantageusement, la source de chaleur externe peut consister en un brûleur de chaudière.

Suivant une variante avantageuse d'un deuxième type, on récupère de la chaleur de la biomasse en aval du poste de traitement et on transfère cette chaleur récupérée à la biomasse en amont du poste de traitement.

De préférence, on peut récupérer de la chaleur de la biomasse en aval du poste de traitement et transférer cette chaleur récupérée à la biomasse en amont du poste de traitement par l'intermédiaire d'un moyen d'échange de chaleur, direct ou indirect, entre la biomasse sortant du poste de traitement et la biomasse circulant dans le trajet en amont du poste de traitement. Le procédé comprend une étape d'injection d'un additif dans la biomasse en amont du moyen de chauffage.

L'additif injecté peut consister en tout catalyseur apte à décomposer la matière organique, par exemple un acide tel que l'acide sulfurique ou un catalyseur tel que décrit dans le brevet EP 2 388 305 A2.

Une telle étape d'injection contribue aussi à diminuer la viscosité de la biomasse et à favoriser ainsi sa montée en température, et permet aussi de réduire les phénomènes d'encrassement dans le trajet.

Alternativement, l'étape d'injection peut être réalisée en aval ou au sein du moyen de chauffage. On injecte l'additif dans la biomasse de sorte que l'additif soit soumis à la vapeur injectée. Autrement dit, on injecte l'additif dans la biomasse de sorte que l'additif, lors de son injection, soit soumis à un flux de vapeur généré par l'injection de vapeur.

De cette façon, l'additif est mélangé à la biomasse sous l'action de la vapeur qui créée une zone de turbulence. Plus précisément, l'additif est ainsi mélangé intimement à la biomasse déchiquetée en particules sous l'action de la vapeur qui créée une zone de turbulence.

De préférence, on peut injecter l'additif et la vapeur dans la biomasse dans un volume intérieur d'un réceptacle, ce réceptacle étant par exemple un récipient ou un tuyau ou un élément de tuyauterie. Selon une autre caractéristique avantageuse de l'invention, on prélève une partie de la biomasse dans le poste de traitement au moyen d'une branche de recirculation et on renvoie cette partie dans le poste de traitement de façon à générer un mouvement de la biomasse dans le poste de traitement.

Un tel prélèvement et renvoi de partie de biomasse dans le poste de traitement permet de limiter le collage ou dépôt de la biomasse dans le poste de traitement, et de s'affranchir de tout moyen ou opération destinée à limiter un tel collage ou dépôt.

Avantageusement, la partie de biomasse est prélevée avec un débit compris entre 5 et 15 fois le débit de biomasse entrant dans le poste de traitement.

De préférence, on peut mélanger la vapeur injectée et la biomasse dans le trajet entre la pompe de mise en pression et le moyen de chauffage avec un mélangeur.

L'invention concerne aussi un dispositif pour la mise en oeuvre d'un procédé selon différentes combinaisons des caractéristiques qui viennent d'être décrites, ce dispositif comprenant un trajet de traitement industriel comportant :
- une entrée agencée pour faire entrer de la biomasse entrante dans le trajet,
- une pompe de mise en pression agencée pour déplacer la biomasse dans le trajet,
- un moyen de chauffage apte à chauffer la biomasse,
- un poste de traitement apte à maintenir la biomasse sensiblement à une température d'entrée dans le poste de traitement, le poste de traitement étant installé en aval du moyen de chauffage,
- un moyen d'échange de chaleur au moins indirect entre la biomasse sortant du poste de traitement et la biomasse circulant dans le trajet en amont du poste de traitement,
- un moyen de génération de vapeur d'eau,
- un mélangeur agencé pour mélanger la vapeur d'eau produite par le moyen de génération de vapeur et la biomasse dans le trajet entre la pompe de mise en pression et le moyen de chauffage, et un moyen d'injection d'additif agencé pour injecter un additif dans la biomasse en amont du moyen de chauffage de sorte que l'additif soit soumis à la vapeur injectée.
Par l'expression « au moins indirect », on entend un moyen d'échange de chaleur indirect ou direct, comme par exemple illustré dans les modes de réalisation décrits ci-dessous.

De préférence, le moyen de génération de vapeur d'eau et le mélangeur peuvent être agencés pour injecter la vapeur dans le mélangeur à une pression supérieure d'au moins 0,2 MPa à la pression de la biomasse au niveau de l'injection de vapeur. De préférence, le moyen de génération de vapeur et le mélangeur peuvent être agencés pour injecter la vapeur dans le mélangeur avec une vitesse d'injection de la vapeur supérieure à 130 m/s, par exemple comprise entre 200 et 250 m/s. La vitesse d'injection de vapeur est typiquement générée par le différentiel de pression de la biomasse et de pression d'injection de la vapeur et/ou par les dimensions respectives des organes d'injection de biomasse et de vapeur.

De préférence, le dispositif peut être agencé pour injecter la vapeur dans le mélangeur avec un débit d'injection de vapeur correspondant à 20% ou moins du débit de la biomasse en déplacement dans le trajet.

De préférence, le moyen de génération de vapeur d'eau et le mélangeur peuvent être agencés pour injecter la vapeur obliquement ou de préférence perpendiculairement à la direction de déplacement de la biomasse dans le trajet. Cette direction de déplacement de la biomasse dans le trajet est la direction dans laquelle se déplace la biomasse dans une zone d'injection de la vapeur dans le trajet.

Toutefois, le moyen de génération de vapeur d'eau et le mélangeur peuvent aussi être agencés pour injecter la vapeur à contre-courant de la biomasse.

Alternativement, le moyen de génération de vapeur d'eau et le mélangeur peuvent être agencés pour injecter la vapeur à co-courant de la biomasse. Le dispositif comprend en outre des moyens d'injection aptes à injecter un additif dans le trajet, de sorte que l'additif soit soumis à la vapeur injectée. De préférence, le mélangeur peut comprendre un réceptacle tel qu'un récipient ou un tuyau ou un élément de tuyauterie.

La vitesse de vapeur précédemment mentionnée correspond de préférence à une vitesse de la vapeur juste avant que la vapeur n'entre en contact de la biomasse, c'est-à-dire dans la zone d'injection de la vapeur dans le trajet, cette zone étant située dans le volume intérieur du réceptacle.

De préférence, le mélangeur peut être ou comprendre un mélangeur statique, de préférence du sein d'un réceptacle tel que précédemment mentionné.

Selon une caractéristique avantageuse, le moyen d'échange de chaleur comprend :
- un circuit de transfert dans lequel circule un fluide de transfert de manière à chauffer la biomasse dans le moyen de chauffage par échange thermique entre le fluide de transfert et la biomasse, et
- des moyens de mise en circulation du fluide de transfert, de préférence une pompe, aptes à faire circuler le fluide de transfert dans le circuit de transfert.

De préférence, le dispositif peut être agencé pour chauffer le fluide de transfert jusqu'à une température supérieure à 220°C.

La pompe de mise en pression peut être agencée pour élever la pression de la biomasse au-dessus de la pression de saturation, typiquement supérieure à 1,2 MPa.

Selon une autre caractéristique avantageuse, le dispositif comprend en outre une source de chaleur externe agencée pour chauffer le fluide de transfert et un fluide caloporteur circulant dans une enveloppe du poste de traitement, de préférence de manière à assurer une montée et/ou un maintien de température de la biomasse au poste de traitement. De préférence, le fluide de transfert et le fluide caloporteur sont identiques.

De préférence, la source de chaleur externe peut être agencée :
- d'une part, pour chauffer la biomasse avant son arrivée dans le poste de traitement, et
- d'autre part, pour maintenir la température de la biomasse au poste de traitement, de préférence au moins égale à 180°C.

Une telle source de chaleur externe permet de diminuer la dimension du moyen de chauffage et de compenser les pertes énergétiques.

Très avantageusement, le dispositif est agencé pour que la biomasse entre dans le poste de traitement par une partie inférieure et en sorte par une partie supérieure.

Une biomasse, en particulier lorsqu'elle consiste en une boue d'épuration, est plus dense que l'eau environnante. La fraction solide, entourée de matière organique non dissoute, va donc avoir tendance par effet gravitaire à se placer à une altitude inférieure par rapport aux fractions déjà solubilisées et donc pour lesquelles les réactions de carbonisation sont en cours ou ont déjà eu lieu. Le temps de résidence d'une fraction de biomasse non carbonisée dans le poste de traitement est ainsi augmenté, comparativement à un dispositif faisant entrer la biomasse par une partie supérieure et la faisant sortir par une partie inférieure.

L'augmentation relative du temps de résidence de la biomasse dans le poste de traitement permet d'augmenter la qualité du traitement.

Selon une caractéristique très avantageuse, le dispositif selon l'invention comprend en outre une branche de recirculation agencée pour prélever une partie de biomasse dans le poste de traitement et pour renvoyer cette partie de biomasse dans le poste de traitement.

Selon une caractéristique avantageuse le poste de traitement est mécaniquement passif, c'est-à-dire ne comportant pas de racleur ou de mélangeur.

De telles pièces sont des pièces à risque pour le personnel et la disponibilité de l'installation.

Avantageusement, le poste de traitement est un réacteur de carbonisation hydrothermale pour des boues d'épuration.

L'invention es définie par les revendications ci-dessous.

### Description des figures et modes de réalisation

D'autres avantages et particularités de l'invention apparaîtront à la lecture de la description détaillée de mises en oeuvre et de modes de réalisation nullement limitatifs, et des dessins annexés suivants :
- la FIGURE 1 est une vue schématique d'un dispositif de carbonisation hydrothermale selon l'invention comprenant un poste de refroidissement,
- la FIGURE 2 est une vue schématique d'un dispositif de carbonisation hydrothermale selon l'invention comprenant un moyen d'échange de chaleur direct,
- les FIGURES 3 et 4 sont des vues schématiques de mélangeurs selon l'invention.

Les modes de réalisation décrits ci-après étant nullement limitatifs, on pourra notamment considérer des variantes de l'invention ne comprenant qu'une sélection de caractéristiques décrites, isolées des autres caractéristiques décrites (même si cette sélection est isolée au sein d'une phrase comprenant ces autres caractéristiques), si cette sélection de caractéristiques est suffisante pour conférer un avantage technique ou pour différencier l'invention par rapport à l'état de la technique antérieure. Cette sélection comprend au moins une caractéristique, de préférence fonctionnelle sans détails structurels, ou avec seulement une partie des détails structurels si cette partie uniquement est suffisante pour conférer un avantage technique ou pour différencier l'invention par rapport à l'état de la technique antérieure.

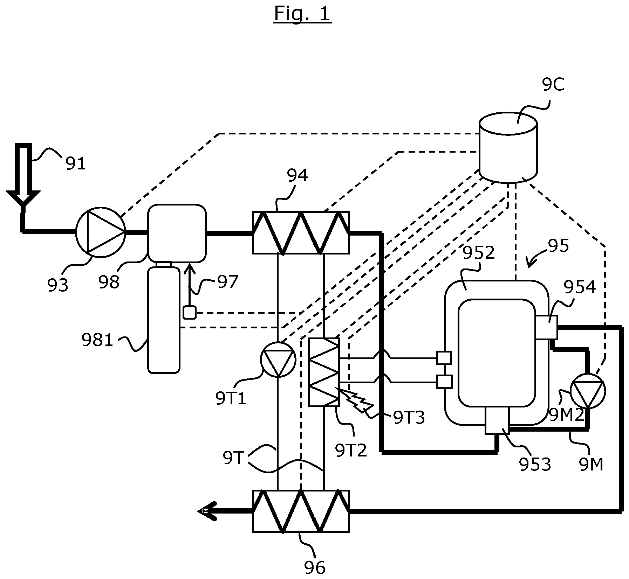

La FIGURE 1 illustre un mode de réalisation préféré de l'invention.

Suivant ce mode de réalisation, le dispositif selon l'invention comprend un trajet de traitement industriel au sein duquel circule de la biomasse.

De la biomasse entrante, par exemple de la boue d'épuration déshydratée, entre par une entrée 91 dans le trajet où elle est introduite au sein d'une tuyauterie reliant l'entrée 91 à un mélangeur 98, cette tuyauterie comportant entre l'entrée 91 et le mélangeur 98 une pompe de mise en pression 93.

La pompe de mise en pression 93 élève la pression de la biomasse jusqu'à une valeur permettant de chauffer la biomasse à une température supérieure à 100°C sans ébullition. Autrement dit, la pompe de mise en pression 93 élève la pression de la biomasse au-dessus de la pression de saturation, typiquement supérieure à 1,2 MPa.

La pompe de mise en pression 93 permet de faire circuler la biomasse dans le trajet.

Plus spécifiquement, la pompe de mise en pression 93 est d'un type apte à élever la pression de la biomasse en sortie de pompe 93 jusqu'à une valeur supérieure à 3 MPa (pompe à piston, à membrane ou autre).

Sous l'effet de la pompe de mise en pression 93, la biomasse est acheminée de la pompe de mise en pression 93 au mélangeur 98.

Le mélangeur 98 est agencé pour mélanger de la vapeur d'eau produite par un moyen de génération de vapeur 981 avec la biomasse. Le mélangeur 98 peut être un mélangeur statique (moyen obligeant la biomasse et la vapeur d'eau à cheminer ensemble pendant une durée suffisante pour favoriser le mélange entre la vapeur et la biomasse) ou consister en un mélangeur apte à faire recevoir la vapeur perpendiculairement à la direction de déplacement de la biomasse dans la tuyauterie reliant la pompe de mise en pression 93 et le moyen de chauffage 94, ou être constitué d'une configuration de la tuyauterie de type éjecteur.

On pilote de préférence le débit de vapeur, par exemple par le moyen de commande 9C, de manière à élever la température de la biomasse (mélangée à un additif) à un point de fonctionnement optimal tant pour le dimensionnement des différents éléments du dispositif, par exemple le moyen de chauffage 94, que pour la consommation énergétique globale du dispositif. On pilote de préférence le débit de vapeur en contrôlant le débit de vapeur injectée.

Par exemple, la vapeur est injectée avec une pression supérieure à celle de la biomasse dans le trajet en amont de la pompe de mise en pression 93, et par conséquent à une température supérieure à la température de la biomasse. Toutefois, on pilote le moyen de génération de vapeur 981 pour élever la température de la biomasse de manière à optimiser la récupération d'énergie mise en oeuvre dans le dispositif.

Typiquement, le débit d'injection de vapeur peut correspondre jusqu'à 20% du débit de la biomasse en déplacement dans le trajet. On injecte un additif dans la biomasse par tout moyen d'injection approprié 97, de préférence en amont du moyen de chauffage 94, afin de diminuer encore davantage la viscosité de la biomasse.

L'injection de l'additif est réalisée de manière à le soumettre à l'action de la vapeur, favorisant son mélange avec la biomasse.

Une tuyauterie relie aussi le mélangeur 98 à un moyen de chauffage 94.

Le moyen de chauffage 94 est de préférence un échangeur de chaleur.

Ce moyen de chauffage 94 permet de chauffer la biomasse par échange thermique entre un fluide de transfert circulant dans un circuit de transfert 9T et la biomasse traversant le moyen de chauffage 94. Pour ce faire, le fluide de transfert, par exemple de l'huile, est lui-même chauffé au moyen d'une source de chaleur 9T3 par l'intermédiaire d'un échangeur de chaleur 9T2, cette source de chaleur étant par exemple un brûleur de chaudière.

Une tuyauterie relie aussi le moyen de chauffage 94 à un poste de traitement 95 vers lequel est acheminée la biomasse.

Le poste de traitement 95 est de préférence un réacteur comportant une chambre apte à recevoir de la biomasse et à maintenir cette biomasse à une pression typiquement comprise entre 2 et 3 MPa.

Dans un mode de mise en oeuvre préféré, la fonction unique du poste de traitement 95 est d'assurer un temps de résidence permettant de soumettre la biomasse à des réactions chimiques, typiquement d'hydrolyse. Pour cette raison, le poste de traitement 95 peut alternativement consister en un réacteur, chicané ou non, tubé ou non, ou par exemple en un tube de longueur suffisante pour assurer le temps de séjour requis.

De préférence, la biomasse provenant du moyen de chauffage 94 entre dans la chambre du poste de traitement 95 par une partie inférieure 953, c'est-à-dire par une partie du poste de traitement 95 dont l'altitude est sensiblement la plus basse relativement à l'implantation du poste de traitement 95 dans le local abritant le dispositif.

Suivant le mode de réalisation de la FIGURE 1, une tuyauterie relie aussi le poste de traitement 95 à un poste de refroidissement 96.

Après un temps de résidence, la biomasse (hydrolysée) sort de la chambre du poste de traitement 95 par une partie supérieure 954 d'où elle est acheminée vers le poste de refroidissement 96. Par partie supérieure 954, on entend une partie du poste de traitement 95 dont l'altitude est sensiblement la plus haute relativement à l'implantation du poste de traitement 95 dans le local abritant le dispositif, par opposition avec la partie inférieure 953.

Alternativement, la biomasse peut aussi entrer dans le poste de traitement 95 par une partie supérieure et en sortir par une partie inférieure.

Selon encore une autre alternative, la biomasse peut aussi entrer dans le poste de traitement 95 par une partie inférieure et être acheminée depuis cette partie inférieure jusqu'à une partie supérieure de la chambre par un tuyau, la biomasse pouvant sortir de la chambre du poste de traitement 95 par une partie inférieure.

Le poste de refroidissement 96 est de préférence un échangeur de chaleur.

Le poste de refroidissement 96 permet de refroidir la biomasse sortant du poste de traitement 95 par échange thermique entre le fluide de transfert circulant dans le circuit de transfert 9T et la biomasse traversant ce poste de refroidissement 96.

Ainsi, le circuit de transfert 9T relie le moyen de chauffage 94 au poste de refroidissement 96. Il constitue ainsi, avec le moyen de chauffage 94 et le poste de refroidissement 96, un moyen d'échange de chaleur entre la biomasse sortant du poste de traitement 95 et la biomasse circulant dans le trajet en amont du poste de traitement 95.

Comme illustré en FIGURE 1, le fluide de transfert est mis en circulation dans le circuit de transfert 9T par des moyens de circulation 9T1, typiquement une pompe.

Une source de chaleur externe 9T3, par exemple un brûleur de chaudière, réchauffe le fluide de transfert au niveau de l'échangeur de chaleur 9T2. La biomasse circulant dans le moyen de chauffage est réchauffée par le fluide de transfert ainsi réchauffé duquel elle prélève une partie de sa chaleur.

Le fluide de transfert récupère aussi une partie de la chaleur de la biomasse circulant dans le poste de refroidissement 96.

Le fluide de transfert est par exemple chauffé jusqu'à une température supérieure à 220°C.

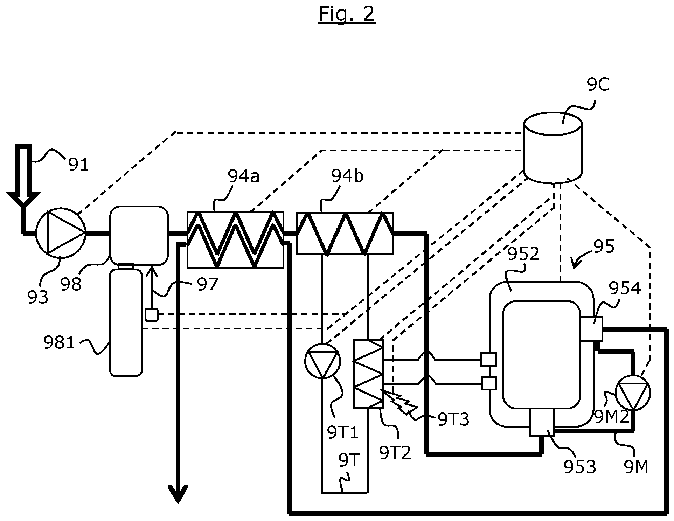

Alternativement, selon un mode de réalisation représenté en FIGURE 2, une partie de la chaleur de la biomasse circulant dans le trajet en aval du poste de traitement 95 est transférée à la biomasse circulant dans un récupérateur de chaleur 94a installé en amont du moyen de chauffage 94b. Dans ce cas, le moyen d'échange de chaleur réalise un échange de chaleur direct entre la biomasse sortant du poste de traitement 95 et la biomasse circulant dans le trajet en amont du poste de traitement 95, par l'intermédiaire du récupérateur de chaleur 94a.

Dans un mode de réalisation préféré, la chambre du poste de traitement 95 est entourée d'une enveloppe 952 dans laquelle un fluide caloporteur est mis en circulation.

Ce fluide caloporteur est chauffé et maintenu à une température apte à maintenir la biomasse contenue dans la chambre à sa température d'avant son entrée dans le poste de traitement 95, c'est-à-dire lorsque la biomasse se trouvait entre le moyen de chauffage 94 et le poste de traitement 95, et apte à compenser les pertes thermiques liées à la structure du poste de traitement 95.

Le réchauffage du fluide caloporteur est de préférence réalisé par la même source de chaleur externe 9T3 que celle réchauffant le fluide de transfert, au niveau de l'échangeur de chaleur 9T2. Le fluide de transfert et le fluide caloporteur peuvent ainsi être un même fluide, par exemple de l'huile, circulant dans une circuiterie agencée pour chauffer le fluide de transfert (circulant dans le circuit 9T) et le fluide caloporteur (circulant dans l'enveloppe 952) aux températures voulues. Le pilotage différentiel de la température du fluide de transfert et du fluide caloporteur est réalisé par tout moyen approprié, par exemple des vannes (non représentées) montées sur ladite circuiterie et un pilotage de l'ouverture et la fermeture de ces vannes ainsi que de la source de chaleur 9T3.

Afin de monter la température de la biomasse dans le trajet au moyen de chauffage 94, on pilote le dispositif, par exemple par le moyen de commande 9C, pour que la source de chaleur 9T3 élève le fluide de transfert à une température supérieure à celle de la biomasse contenue dans le poste de traitement 95, par exemple à une température proche de 210°C.

Ainsi, on utilise une même source de chaleur externe 9T3 pour chauffer le fluide de transfert et le fluide caloporteur assurant une montée et/ou un maintien de température de la biomasse au poste de traitement 95. Autrement dit, on utilise la même source de chaleur externe 9T3 pour chauffer :
- d'une part, le fluide de transfert, permettant de chauffer la biomasse avant son arrivée au poste de traitement et,
- d'autre part, le fluide caloporteur, permettant de maintenir la température de la biomasse au poste de traitement, de préférence au moins égale à 180°C.

Pour limiter le phénomène de dépôt de biomasse sur les parois de la chambre du poste de traitement 95 tout en utilisant un poste de traitement 95 mécaniquement passif (c'est-à-dire sans racleur et/ou mélangeur), le poste de traitement 95 comprend de préférence une branche de recirculation 9M permettant de faire circuler la biomasse dans la chambre. Pour ce faire, on aspire de préférence de la biomasse en partie supérieure 954 (la biomasse y étant plus liquide) et on réinjecte cette biomasse dans la chambre par une partie inférieure 953. De préférence, le débit de cette recirculation est dimensionné pour que la biomasse circulant dans la branche de recirculation 9M soit prélevée avec un débit compris entre 5 et 15 fois le débit de biomasse entrant dans le poste de traitement 95 en provenance du moyen de chauffage 94. Une telle recirculation assure une bonne homogénéité de la température de la biomasse contenue dans le poste de traitement 95.

La mise en circulation de cette biomasse dans la branche de recirculation 9M est de préférence assurée par une pompe à membrane 9M1, de préférence étanche et déportée du poste de traitement 95. Une telle pompe 9M1 ainsi installée augmente la fiabilité du dispositif, cette pompe 9M1 pouvant par exemple être réparée ou entretenue sans impliquer de mettre le dispositif hors service dans son intégralité.

On voit que les différentes solutions proposées par la présente invention permettent de diminuer la viscosité de la biomasse et par conséquent de favoriser l'augmentation de sa température par des moyens réduits.

La surface des échangeurs de chaleur (moyen de chauffage 94, 94b et/ou poste de refroidissement 96), les diamètres de tuyauterie ainsi que le volume du poste de traitement 95 peuvent ainsi être réduits.

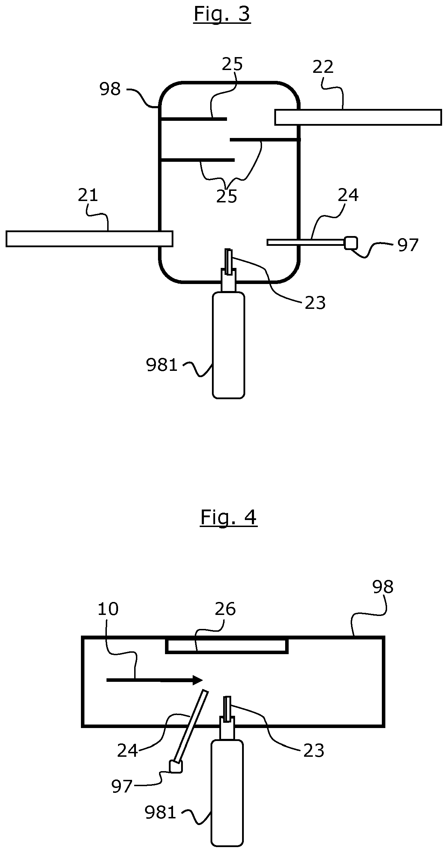

Un exemple de mélangeur 98 selon l'invention est illustré en FIGURE 3. La biomasse entre dans le mélangeur 98 par un canal d'amenée 21, par exemple relié à la pompe de mise en pression 93 illustrée en FIGURE 1. Lorsque la biomasse arrive dans le volume intérieur du mélangeur 98, elle est soumise à la vapeur injectée par le moyen de génération de vapeur 981 par un gicleur 23. Dans cet exemple, la vapeur est injectée perpendiculairement au canal d'amenée 21. De l'acide, en tant qu'additif, est aussi injecté dans la biomasse, à l'intérieur du volume intérieur du mélangeur 98, par le moyen d'injection 97 qui comprend une tête d'injection 24. La biomasse, la vapeur et l'acide sont ainsi mélangés dynamiquement dans le mélangeur 98, par exemple et notamment sous l'effet de la pression différentielle d'injection de vapeur et de biomasse, de préférence supérieure à 0,2 MPa. A titre d'exemple, la biomasse entre dans le mélangeur avec une vitesse inférieure à 1 m/s, et la vapeur est injectée dans le mélangeur 98 avec une vitesse supérieure à 130 m/s, de préférence entre 200 et 250 m/s. Le mélange est dirigé vers le canal de sortie 22, par exemple en direction du moyen de chauffage 94 illustré en FIGURE 1. Optionnellement, le mélangeur 98 peut comprendre un mélangeur statique par exemple constitué par des chicanes 25. Dans l'exemple de la FIGURE 3, la vapeur est injectée obliquement ou perpendiculairement à la direction de déplacement de la biomasse dans le volume intérieur du mélangeur 98. Le débit d'injection de vapeur correspond à 20% ou moins, typiquement entre 10% et 20%, du débit de la biomasse en déplacement dans le trajet

Un autre exemple de mélangeur 98 selon l'invention est illustré en FIGURE 4. Dans cet exemple, le mélangeur 98 comprend une pièce d'usure 26 pour limiter ou éviter l'érosion de la partie du mélangeur 98, dans cet exemple un tuyau, soumis au flux de vapeur généré par l'injection de vapeur. Cette pièce d'usure 26 fait face au gicleur 23, et est de préférence démontable. Dans l'exemple de la FIGURE 4, la vapeur est injectée perpendiculairement à la direction de déplacement de la biomasse dans le volume intérieur du mélangeur 98, la biomasse se déplaçant suivant la direction 10.

Bien sûr, l'invention n'est pas limitée aux exemples qui viennent d'être décrits et de nombreux aménagements peuvent être apportés à ces exemples sans sortir du cadre de l'invention. De plus, les différentes caractéristiques, formes, variantes et modes de réalisation de l'invention peuvent être associés les uns avec les autres selon diverses combinaisons dans la mesure où ils ne sont pas incompatibles ou exclusifs les uns des autres.

Dans une variante des figures 3 et 4, la vapeur est injectée à contre-courant de la direction de déplacement de la biomasse dans le volume intérieur du mélangeur 98.

## Revendications

1. Procédé pour chauffer une biomasse en déplacement dans un trajet de traitement industriel comportant une entrée (91) pour la biomasse entrante, une pompe de mise en pression (93), un moyen de chauffage (94, 94b) et un poste de traitement (95), **caractérisé en ce qu'**on injecte de la vapeur dans le trajet entre la pompe de mise en pression (93) et le moyen de chauffage (94, 94b)
et **en ce qu'**il comprend une étape d'injection d'un additif dans la biomasse en amont du moyen de chauffage (94, 94b) dans laquelle on injecte l'additif dans la biomasse de sorte que l'additif soit soumis à la vapeur injectée.

2. Procédé selon la revendication 1, **caractérisé en ce qu'**on pilote l'injection de vapeur et le moyen de chauffage (94, 94b) pour que la température de la biomasse atteigne une température paramétrée avant son arrivée dans le poste de traitement (95), la température paramétrée étant comprise entre 165°C et 205°C, de préférence 185°C.

3. Procédé selon l'une des revendications 1 ou 2, **caractérisé en ce qu'**on pilote l'injection de vapeur pour porter la température de la biomasse à une valeur de supérieure à 70°C à l'entrée du moyen de chauffage (94, 94b).

4. Procédé selon l'une des revendications 1 à 3, **caractérisé en ce qu'**on injecte la vapeur obliquement ou perpendiculairement à la direction de déplacement de la biomasse dans le trajet ou à contre-courant de la direction de déplacement de la biomasse dans le trajet.

5. Procédé selon l'une des revendications 1 à 4, **caractérisé en ce que** la pompe de mise en pression (93) élève la pression de la biomasse jusqu'à une valeur permettant de chauffer la biomasse à une température supérieure à 100°C sans ébullition.

6. Procédé selon la revendication 5, **caractérisé en ce que** la pression en sortie de pompe de mise en pression (93) est supérieure à 3 MPa.

7. Procédé selon l'une des revendications 1 à 6, **caractérisé en ce que** le trajet comporte en outre un poste de refroidissement (96) en aval du poste de traitement (95), et **en ce qu'**on réchauffe un fluide de transfert dans son parcours entre le poste de refroidissement (96) et le moyen de chauffage (94).

8. Procédé selon la revendication 7, **caractérisé en ce qu'**on chauffe le fluide de transfert jusqu'à une température supérieure à celle de la biomasse au poste de traitement (95).

9. Procédé selon la revendication 7 ou 8, **caractérisé en ce qu'**on utilise une même source de chaleur externe (9T3) pour chauffer le fluide de transfert et un fluide caloporteur assurant une montée et/ou un maintien de température de la biomasse au poste de traitement (95), le fluide caloporteur circulant dans une enveloppe (952) du poste de traitement (95).

10. Procédé selon l'une des revendications 1 à 9, **caractérisé en ce qu'**on récupère de la chaleur de la biomasse en aval du poste de traitement (95) et **en ce qu'**on transfère cette chaleur récupérée à la biomasse en amont du poste de traitement (95).

11. Procédé selon l'une des revendications 1 à 10, **caractérisé en ce qu'**on récupère de la chaleur de la biomasse en aval du poste de traitement (95) et **en ce qu'**on transfère cette chaleur récupérée à la biomasse en amont du poste de traitement (95) par l'intermédiaire d'un moyen d'échange de chaleur entre la biomasse sortant du poste de traitement (95) et la biomasse circulant dans le trajet en amont du poste de traitement (95).

12. Procédé selon l'une des revendications 1 à 11, **caractérisé en ce qu'**on prélève une partie de la biomasse dans le poste de traitement (95) au moyen d'une branche de recirculation (9M) et on renvoie cette partie dans le poste de traitement (95) de façon à générer un mouvement de la biomasse dans le poste de traitement (95).

13. Procédé selon l'une des revendications 1 à 12, **caractérisé en ce qu'**on mélange la vapeur injectée et la biomasse dans le trajet entre la pompe de mise en pression (93) et le moyen de chauffage (94, 94b) avec un mélangeur (98).

14. Dispositif pour la mise en oeuvre d'un procédé selon l'une des revendications 1 à 13, **caractérisé en ce qu'**il comprend un trajet de traitement industriel comportant :
- une entrée (91) agencée pour faire entrer de la biomasse entrante dans le trajet,
- une pompe de mise en pression (93) agencée pour déplacer la biomasse dans le trajet,
- un moyen de chauffage (94) apte à chauffer la biomasse,
- un poste de traitement (95) apte à maintenir la biomasse sensiblement à une température d'entrée dans le poste de traitement (95), le poste de traitement (95) étant installé en aval du moyen de chauffage (94),
- un moyen d'échange de chaleur entre la biomasse sortant du poste de traitement (95) et la biomasse circulant dans le trajet en amont du poste de traitement (95),
- un moyen de génération de vapeur d'eau (981),
- un mélangeur (98) agencé pour mélanger la vapeur d'eau produite par le moyen de génération de vapeur d'eau (981) et la biomasse dans le trajet entre la pompe de mise en pression (93) et le moyen de chauffage (94, 94b), et
- un moyen d'injection d'additif agencé pour injecter un additif dans la biomasse en amont du moyen de chauffage (94, 94b) de sorte que l'additif soit soumis à la vapeur injectée.

15. Dispositif selon la revendication 14, **caractérisé en ce que** le mélangeur (98) comprend un mélangeur statique.

16. Dispositif selon la revendication 14 ou 15, **caractérisé en ce que** le moyen d'échange de chaleur comprend :
- un circuit de transfert (9T) dans lequel circule un fluide de transfert de manière à chauffer la biomasse dans le moyen de chauffage (94, 94b) par échange thermique entre le fluide de transfert et la biomasse, et
- des moyens de mise en circulation (9T1) du fluide de transfert aptes à faire circuler le fluide de transfert dans le circuit de transfert (9T).

17. Dispositif selon la revendication 16, **caractérisé en ce qu'**il comprend en outre une source de chaleur externe (9T3) agencée pour chauffer le fluide de transfert et un fluide caloporteur circulant dans une enveloppe (952) du poste de traitement (95).

18. Dispositif selon l'une des revendications 14 à 15, caractérisé en ce le poste de traitement (95) est agencé pour que la biomasse entre dans le poste de traitement (95) par une partie inférieure (953) et en sorte par une partie supérieure (954).

## Patentansprüche

1. Verfahren zum Erwärmen einer Biomasse, die in einer industriellen Behandlungsstrecke bewegt wird, welche einen Eingang (91) für die eintretende Biomasse, eine Druckaufbaupumpe (93), eine Heizvorrichtung (94, 94b) und eine Behandlungsstation (95) umfasst, **dadurch gekennzeichnet, dass** Dampf in die Strecke zwischen der Druckaufbaupumpe (93) und der Heizvorrichtung (94, 94b) eingespritzt wird
und dass es einen Schritt zum Einspritzen eines Additivs in die Biomasse stromaufwärts von der Heizvorrichtung (94, 94b) umfasst, in dem das Additiv derart in die Biomasse eingespritzt wird, dass das Additiv mit dem eingespritzten Dampf beaufschlagt wird.

2. Verfahren gemäss Anspruch 1, **dadurch gekennzeichnet, dass** das Einspritzen des Dampfes und die Heizvorrichtung (94, 94b) derart gesteuert werden, dass die Temperatur der Biomasse vor deren Ankunft in der Behandlungsstation (95) eine parametrierte Temperatur erreicht, wobei die parametrierte Temperatur zwischen 165 °C und 205 °C, vorzugsweise bei 185 °C liegt.

3. Verfahren gemäss einem der Ansprüche 1 oder 2, **dadurch gekennzeichnet, dass** das Einspritzen des Dampfes am Eingang der Heizvorrichtung (94, 94b) zur Steigerung der Temperatur der Biomasse auf einen Wert von über 70 °C gesteuert wird.

4. Verfahren gemäss einem der Ansprüche 1 bis 3, **dadurch gekennzeichnet, dass** der Dampf schräg oder senkrecht zur Bewegungsrichtung der Biomasse in der Strecke oder entgegen der Bewegungsrichtung der Biomasse in der Strecke eingespritzt wird.

5. Verfahren gemäss einem der Ansprüche 1 à 4, **dadurch gekennzeichnet, dass** die Druckaufbaupumpe (93) den Druck der Biomasse bis auf einen Wert erhöht, der das Erwärmen der Biomasse auf eine Temperatur über 100 °C gewährleistet, ohne diese zum Sieden zu bringen.

6. Verfahren gemäss Anspruch 5, **dadurch gekennzeichnet, dass** der Ausgangsdruck der Druckaufbaupumpe (93) höher als 3 MPa ist.

7. Verfahren gemäss einem der Ansprüche 1 bis 6, **dadurch gekennzeichnet, dass** die Strecke ferner eine Kühlstation (96) stromabwärts von der Behandlungsstation (95) aufweist, und dass eine Übertragungsflüssigkeit auf ihrem Weg zwischen der Kühlstation (96) und der Heizvorrichtung (94) erwärmt wird.

8. Verfahren gemäss Anspruch 7, **dadurch gekennzeichnet, dass** die Übertragungsflüssigkeit auf eine Temperatur über jener der Biomasse in der Behandlungsstation (95) erwärmt wird.

9. Verfahren gemäss Anspruch 7 oder 8, **dadurch gekennzeichnet, dass** ein und dieselbe externe Wärmequelle (9T3) zum Erwärmen der Übertragungsflüssigkeit und einer Wärmeträgerflüssigkeit verwendet wird, die ein Ansteigen und/oder eine Erhaltung der Temperatur der Biomasse in der Behandlungsstation (95) gewährleistet, wobei die Wärmeträgerflüssigkeit in einem Mantel (952) der Behandlungsstation (95) zirkuliert.

10. Verfahren gemäss einem der Ansprüche 1 bis 9, **dadurch gekennzeichnet, dass** Wärme der Biomasse stromabwärts von der Behandlungsstation (95) gewonnen wird und dass diese rückgewonnene Wärme stromaufwärts von der Behandlungsstation (95) auf die Biomasse übertragen wird.

11. Verfahren gemäss einem der Ansprüche 1 bis 10, **dadurch gekennzeichnet, dass** Wärme der Biomasse stromabwärts von der Behandlungsstation (95) gewonnen wird und dass diese rückgewonnene Wärme stromaufwärts von der Behandlungsstation (95) auf die Biomasse mittels einer Wärmeaustauschvorrichtung zwischen der aus der Behandlungsstation (95) austretenden Biomasse und der in der Strecke stromaufwärts von der Behandlungsstation (95) zirkulierenden Biomasse übertragen wird.

12. Verfahren gemäss einem der Ansprüche 1 bis 11, **dadurch gekennzeichnet, dass** ein Teil der Biomasse in der Behandlungsstation (95) mittels einer Umlaufleitung (9M) entnommen wird und dass dieser Teil in die Behandlungsstation (95) derart zurückgeführt wird, dass eine Bewegung der Biomasse in der Behandlungsstation (95) erzeugt wird.

13. Verfahren gemäss einem der Ansprüche 1 bis 12, **dadurch gekennzeichnet, dass** der eingespritzte Dampf und die Biomasse in der Strecke zwischen der Druckaufbaupumpe (93) und der Heizvorrichtung (94, 94b) mittels eines Mischers (98) gemischt werden.

14. Vorrichtung zur Durchführung eines Verfahrens gemäss einem der Ansprüche 1 bis 13, **dadurch gekennzeichnet, dass** sie eine industrielle Behandlungsstrecke umfasst, die Folgendes aufweist:
- einen Eingang (91), der eingerichtet ist, um eintretende Biomasse in die Strecke einzuleiten,
- eine Druckaufbaupumpe (93), die eingerichtet ist, um die Biomasse innerhalb der Strecke zu bewegen,
- eine Heizvorrichtung (94), die geeignet ist, um die Biomasse zu erwärmen,
- eine Behandlungsstation (95), die geeignet ist, um die Biomasse im wesentlichen bei einer Eingangstemperatur in der Behandlungsstation (95) zu erhalten, wobei die Behandlungsstation (95) stromabwärts von der Heizvorrichtung (94) eingerichtet ist,
- eine Wärmeaustauschvorrichtung zwischen der Biomasse, die aus der Behandlungsstation (95) austritt und der Biomasse, die innerhalb der Strecke stromaufwärts von der Behandlungsstation (95) zirkuliert,
- eine Wasserdampferzeugungsvorrichtung (981),
- einen Mischer (98), der eingerichtet ist, um den von der Wasserdampferzeugungsvorrichtung (981) erzeugten Wasserdampf und die Biomasse in der Strecke zwischen der Druckaufbaupumpe (93) und der Heizvorrichtung (94, 94b) zu mischen, und
- eine Additiveinspritzvorrichtung, die eingerichtet ist, um ein Additiv derart in die Biomasse stromaufwärts von der Heizvorrichtung (94, 94b) einzuspritzen, dass das Additiv mit dem eingespritzten Dampf beaufschlagt wird.

15. Vorrichtung gemäss Anspruch 14, **dadurch gekennzeichnet, dass** der Mischer (98) einen statischen Mischer umfasst.

16. Vorrichtung gemäss Anspruch 14 oder 15, **dadurch gekennzeichnet, dass** die Wärmeaustauschvorrichtung Folgendes umfasst:
- einen Übertragungskreislauf (9T), in dem eine Übertragungsflüssigkeit derart zirkuliert, dass die Biomasse in der Heizvorrichtung (94, 94b) durch Wärmeaustausch zwischen der Übertragungsflüssigkeit und der Biomasse erwärmt wird, und
- Mittel zur Erzeugung eines Umlaufs (9T1) der Übertragungsflüssigkeit, die geeignet sind, um die Übertragungsflüssigkeit in dem Übertragungskreislauf (9T) zirkulieren zu lassen.

17. Vorrichtung gemäss Anspruch 16, **dadurch gekennzeichnet, dass** sie ferner eine externe Wärmequelle (9T3) umfasst, die eingerichtet ist, um die Übertragungsflüssigkeit und eine Wärmeträgerflüssigkeit, welche in einem Mantel (952) der Behandlungsstation (95) zirkuliert, zu erwärmen.

18. Vorrichtung gemäss einem der Ansprüche 14 bis 15, **dadurch gekennzeichnet, dass** die Behandlungsstation (95) derart eingerichtet ist, dass die Biomasse durch einen unteren Abschnitt (953) in die Behandlungsstation (95) eintritt und durch einen oberen Abschnitt (954) aus ihr austritt.

## Claims

1. A method for heating biomass moving along an industrial treatment line comprising an inlet (91) for the incoming biomass, a pressure pump (93), heating means (94, 94b) and a treatment station (95), **characterized in that** steam is injected into the line between the pressure pump (93) and the heating means (94, 94b) and **characterized in that** the method includes a step in which an additive is injected into the biomass upstream of the heating means (94, 94b), during which the additive is injected into the biomass such that the additive is exposed to the injected steam.

2. The method as claimed in claim 1, **characterized in that** the steam injection and the heating means (94, 94b) are controlled such that the biomass reaches a preset temperature before reaching the treatment station (95), the preset temperature being between 165°C and 205°C, preferably 185°C.

3. The method as claimed in one of claims 1 or 2, **characterized in that** the steam injection is controlled to bring the temperature of the biomass to a value exceeding 70°C at the inlet of the heating means (94, 94b) .

4. The method as claimed in one of claims 1 to 3, **characterized in that** the steam is injected obliquely or perpendicular to the direction of movement of the biomass on the line, or against the direction of movement of the biomass on the line.

5. The method as claimed in one of claims 1 to 4, **characterized in that** the pressure pump (93) increases the pressure of the biomass to a value at which the biomass can be heated to a temperature exceeding 100°C without boiling.

6. The method as claimed in claim 5, **characterized in that** the pressure at the outlet of the pressure pump (93) is greater than 3 MPa.

7. The method as claimed in one of claims 1 to 6, **characterized in that** the line also includes a cooling station (96) downstream of the treatment station (95), and **in that** a transfer fluid is heated when moving between the cooling station (96) and the heating means (94).

8. The method as claimed in claim 7, **characterized in that** the transfer fluid is heated to a temperature exceeding the temperature of the biomass at the treatment station (95).

9. The method as claimed in claim 7 or 8, **characterized in that** a single external heat source (9T3) is used to heat the transfer fluid and a heat-transfer fluid is used to increase and/or maintain the temperature of the biomass at the treatment station (95), the heat-transfer fluid flowing in an envelope (952) of the treatment station (95).

10. The method as claimed in one of claims 1 to 9, **characterized in that** heat is recovered from the biomass downstream of the treatment station (95) and **in that** this recovered heat is transferred to the biomass upstream of the treatment station (95).

11. The method as claimed in one of claims 1 to 10, **characterized in that** heat is recovered from the biomass downstream of the treatment station (95) and **in that** this recovered heat is transferred to the biomass upstream of the treatment station (95) using heat exchange means between the biomass leaving the treatment station (95) and the biomass moving on the line upstream of the treatment station (95).

12. The method as claimed in one of claims 1 to 11, **characterized in that** a portion of the biomass is removed from the treatment station (95) using a recirculation branch (9M) and said portion is returned to the treatment station (95) in order to generate a movement of the biomass in the treatment station (95).

13. The method as claimed in one of claims 1 to 12, **characterized in that** the injected steam and the biomass are mixed on the line between the pressure pump (93) and the heating means (94, 94b) using a mixer (98).

14. A device for implementing a method as claimed in any one of claims 1 to 13, **characterized in that** it includes an industrial treatment line including:
- an inlet (91) designed to bring the incoming biomass onto the line,
- a pressure pump (93) designed to move the biomass on the line,
- heating means (94) designed to heat the biomass,
- a treatment station (95) designed to keep the biomass substantially at an entry temperature at which it enters the treatment station (95), the treatment station (95) being installed downstream of heating means (94),
- heat exchange means to exchange heat between the biomass leaving the treatment station (95) and the biomass moving on the line upstream of the treatment station (95),
- steam generation means (981),
- a mixer (98) designed to mix the steam produced by the steam generation means (981) and the biomass on the line between the pressure pump (93) and the heating means (94, 94b),
- means for injecting an additive into the biomass upstream of the heating means (94, 94b), during which the additive is injected into the biomass such that the additive is exposed to the injected steam.

15. The device as claimed in Claim 14, **characterized in that** the mixer (98) comprises a static mixer.

16. The device as claimed in claim 14 or 15, **characterized in that** the heat exchange means includes:
- a transfer circuit (9T) through which a transfer fluid flows to heat the biomass in the heating means (94, 94b) by heat exchange between the transfer fluid and the biomass, and
- means (9T1) for circulating the transfer fluid that are able to circulate the transfer fluid in the transfer circuit (9T).

17. The device as claimed in claim 16, **characterized in that** it also has an external heat source (9T3) designed to heat the transfer fluid and a heat-transfer fluid flowing in an envelope (952) of the treatment station (95).

18. The device as claimed in one of claims 14 to 15, **characterized in that** the treatment station (95) is arranged such that the biomass enters the treatment station (95) via a lower portion (953) and exits via an upper portion (954).
